Europäisches Patentamt

European Patent Office

Office européen des brevets

(19)

(11) **EP 0 814 430 B1**

(12) **FASCICULE DE BREVET EUROPEEN**

(45) Date de publication et mention de la délivrance du brevet:
**14.05.2003 Bulletin 2003/20**

(51) Int Cl.$^7$: **G06T 5/00**

(21) Numéro de dépôt: **97401360.9**

(22) Date de dépôt: **16.06.1997**

(54) **Procédé de production d'une séquence restaurée d'images d'un objet en mouvement à partir de mesures bruitées**

Verfahren zur Herstellung einer verbesserten Bildsequenz eines bewegenden Objektes aus verrauschten Massnahmen

Method of obtaining a restored image sequence of a moving object from noisy measurements

(84) Etats contractants désignés:
**BE DE FR GB**

(30) Priorité: **18.06.1996 FR 9607552**

(43) Date de publication de la demande:
**29.12.1997 Bulletin 1997/52**

(73) Titulaire: **COMMISSARIAT A L'ENERGIE ATOMIQUE**
**75015 Paris Cédex 15 (FR)**

(72) Inventeurs:
- **Grangeat, Pierre**
  **38330 Saint Ismier (FR)**
- **De Murcia, Jérôme**
  **69006 Lyon (FR)**

(74) Mandataire: **Poulin, Gérard et al**
**BREVALEX**
**3, rue du docteur Lancereaux**
**75008 Paris (FR)**

(56) Documents cités:
**EP-A- 0 512 422**

- **OZKAN M K ET AL: "ADAPTIVE MOTION-COMPENSATED FILTERING OF NOISY IMAGE SEQUENCES" IEEE TRANSACTIONS ON CIRCUITS AND SYSTEMS FOR VIDEO TECHNOLOGY, vol. 3, no. 4, 1 août 1993, pages 277-290, XP000414654**
- **DENNEY T S ET AL: "RECONSTRUCTION OF 3-D LEFT VENTRICULAR MOTION FROM PLANAR TAGGED CARDIAC MR IMAGES: AN ESTIMATION THEORETIC APPROACH" IEEE TRANSACTIONS ON MEDICAL IMAGING, vol. 14, no. 4, 1 décembre 1995, pages 625-635, XP000548581**
- **BASSET A. ET AL.: "Dense Motion Field Estimation Involving Discontinuities Applied to Echocardiographic Image Sequences" PROCEEDINGS OF IEEE ULTRASONICS SYMPOSIUM, vol. 3, 1 novembre 1994, CANNES, FRANCE, pages 1573-1576, XP000644966**

## Description

L'invention se rapporte à un procédé de production d'une séquence restaurée d'images d'un objet en mouvement à partir de mesures bruitées.

De telles images peuvent être de diverses natures, vidéo, radiologiques ou tomographiques. Cela implique que les informations disponibles au départ seront de natures différentes également, car il pourra s'agir de premières images bidimensionnelles ou tridimensionnelles de l'objet, ou de projections d'un rayonnement émis par l'objet ou contraire absorbé dans l'objet sur un réseau bidimensionnel de détecteurs ; dans ce dernier cas, les informations sont les mesures recueillies par les détecteurs, soit des sommes de la propriété de l'objet visualisée sur les images le long des rayons qui aboutissent aux détecteurs, et la restauration d'images doit être précédée d'une reconstruction d'images faisant appel à un algorithme appelé d'inversion des mesures pour construire des premières images de l'objet.

Mais dans tous les cas, le système d'acquisition des mesures produit un bruitage des informations qu'il reçoit, ce qui dégrade les images qu'il donne ; et la dégradation est plus importante dans le cas d'un objet en mouvement de corps solide ou accompagné de déformations, car un flou cinétique est alors produit. Le bruit des mesures peut souvent être réduit en augmentant le temps de pose, mais le flou cinétique s'accroît. Le procédé proposé ici a pour but de réduire la dégradation des mesures en réduisant le temps de pose mais en effectuant un lissage temporel sur les différentes mesures, prises à des phases différentes du mouvement de l'objet, afin de réduire le bruit, au moyen d'un évaluation des déplacements de l'objet.

On a déjà tenté à plusieurs reprises de restaurer ou d'améliorer une séquence d'images à l'aide de procédés utilisant une connaissance du mouvement de l'objet. Dans l'un d'entre eux, les images restaurées sont obtenues en complétant les mesures par des informations tirées d'une loi d'évolution de la position ou de la forme de l'objet ; cette loi est fixée par l'utilisateur. Dans un autre procédé, on propose de reconstruire l'objet au moyen de premières images obtenues pour chacune des phases du mouvement de l'objet où des mesures sont prises ; puis les mouvements de l'objet d'une phase à l'autre sont estimés par une modélisation, et les informations des premières images sont combinées en une image globale en tenant compte des mouvements de l'objet jusqu'à la phase considérée. On se reportera aux documents des demandes françaises 2 701 135 et 95 08001 (cette dernière n'étant pas encore publiée) pour plus de détails.

Le premier de ces procédés impose une connaissance préliminaire au moins approximative du mouvement et n'est donc pas toujours applicable, et la validité du second repose sur la précision de l'évaluation du mouvement de l'objet. Or on constate que cette évaluation n'est pas toujours très bonne, surtout entre des phases éloignées, au point que l'incorporation de certaines premières images, prises à des états de l'objet très différents de l'état de référence, n'améliorait pas la restauration de l'image finale et pouvait même la gâter.

Le document EP-A-0 512 422 décrit l'utilisation d'un seul critère, le lissage spatial, pour corriger l'image.

Le sujet de la présente invention est encore un procédé de restauration d'une séquence d'images à l'aide d'une connaissance du mouvement de l'objet, sans que ce mouvement soit évalué a priori ou donné par convention comme dans le premier document : on recourt à un lissage temporel (appelé aussi régularisation) d'images comme dans le second document, sans cependant s'en contenter, car on recourt aussi à un lissage spatial et à un critère de conformité aux données des mesures pour restaurer l'image. L'emploi conjoint de ces trois moyens permet d'obtenir de bons résultats sans nécessairement faire appel aux premières images de toutes les phases de l'objet pour restaurer l'image à une phase déterminée, ce qui constitue une différence importante à l'égard du second document antérieur. Une application favorite de la présente invention est l'examen des mouvements du coeur à des fins de diagnostic médical, au moyen de procédés classiques de mesure tels que la tomographie d'émission monophotonique (TEMP) et la tomographie par émission de positons (TEP) capables actuellement de mettre en évidence les défauts de perfusion sanguine à la suite de l'obstruction des artères coronaires. Mais la méthode se prête à bien d'autres examens cliniques et applications.

Comme on le verra dans la suite de cette description, de nombreuses méthodes de régularisation spatiale ou temporelle ont été déjà proposées, mais il n'existe apparemment aujourd'hui qu'une méthode qui utilise à la fois, comme dans l'invention, une restauration de séquence d'images en utilisant à la fois un critère de conformité ou d'adéquation entre les mesures et l'image, une régularisation spatiale et une régularisation temporelle : il s'agit d'un article de Lalush et Tsui intitulé "*Space-time Gibbs priors applied to gated spect myocardial perfusion studies*" communiqué à un congrès de 1995 à Aix-les-Bains. Mais cette méthode n'est proposée que pour des objets stationnaires ou évoluant très peu au cours du temps, et la régularisation temporelle consiste alors en des moyennes d'une mesure à l'autre sur chaque point de mesure. Cette méthode ne suffit pas pour des objets dont le mouvement est important, tels que le muscle cardiaque.

L'invention concerne donc sous sa forme la plus générale un procédé de restauration d'images d'un objet en mouvement, comprenant les étapes suivantes :

- obtention d'au moins une séquence d'images primitives du corps en mouvement par des mesures prises par des détecteurs ;
- évaluation d'une loi de mouvement de l'objet au moyen de la séquence d'images primitives ;
- modification des images primitives pour obtenir des images restaurées en appliquant à la fois un critère d'adéquation des images restaurées aux mesures, un critère de régularisation spatiale des images restaurées et un critère de régularisation temporelle de la séquence des images restaurées en respectant la loi de mouvement de l'objet.

Un aspect essentiel de l'invention est donc la détermination d'une loi des mouvements de l'objet pour fournir une séquence d'images approchées de l'objet qui servent de fondement au critère d'adéquation des images restaurées. En d'autres termes, les images sont restaurées en tenant compte des images approchées obtenues expérimentalement, ce qui peut conduire à des résultats bien meilleurs qu'en appliquant simplement des critères de régularisation spatiale et temporelle des images, qui ont pour intérêt principal d'atténuer des bruits de mesure et des défauts locaux de l'image mesurée mais peuvent rendre l'image restaurée moins nette s'ils sont appliqués avec exagération. Le critère d'adéquation aux mesures expérimentales peut jouer comme un critère modérateur des précédents. La séquence d'images primitives peut être prise par les détecteurs mêmes qui servent à obtenir les images à restaurer (par exemple des détecteurs de rayonnement dans le cas d'un objet émetteur) ou des détecteurs différents (par exemple des capteurs ultrasonores). La loi de déplacement n'est normalement pas une loi analytique mathématique, mais généralement un champ de déplacement des points de l'objet.

Avantageusement, les critères sont exprimés en autant de termes d'une fonction d'erreur entre les images restaurées et les mesures correspondant aux images primitives associées, la fonction d'erreur admettant un minimum correspondant à une restauration idéale.

L'invention sera maintenant décrite en liaison aux figures suivantes afin d'en découvrir d'autres aspects et avantages :

- la figure 1 est un organigramme général du procédé ;
- la figure 2 est un schéma de dispositif de prises de mesures ;
- la figure 3 est une représentation d'image pour expliciter la régularisation temporelle ;
- la figure 4 est une courbe d'une fonction employée dans la régularisation temporelle ;
- les figures 5(a) à 5(e), et 6(a) à 6(d), illustrent deux séries de résultats expérimentaux ;
- et les figures 7, 8 et 9 représentent un schéma de modélisation du myocarde en coupes transversale, longitudinale et en perspective.

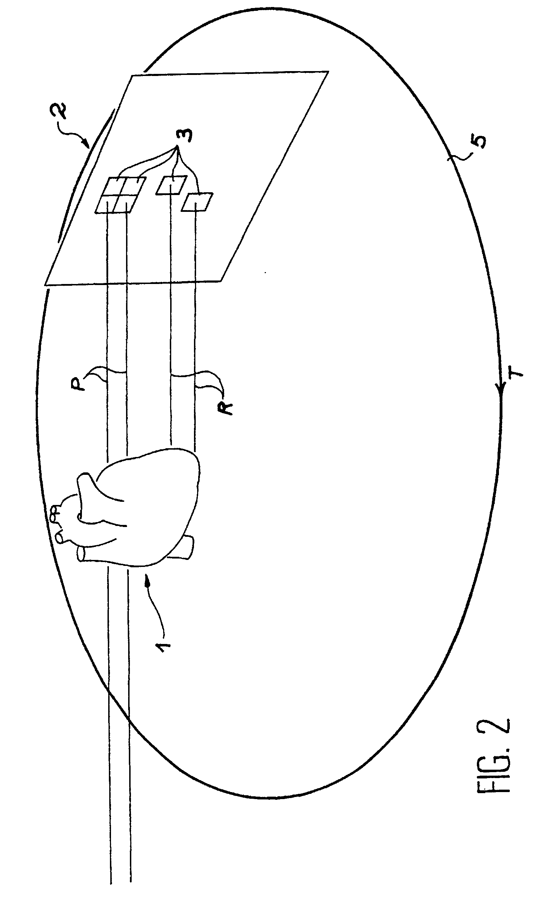

Plaçons-nous donc dans un cas plausible d'utilisation de cette invention, dans lequel (cf. Figure 2) les images de l'objet 1 sont restaurées par un procédé d'inversion de projections tomographiques accomplies à l'aide d'un réseau bidimensionnel 2 de détecteurs 3 parcourant au moins une trajectoire T autour de l'objet 1. Les mesures sont ici des mesures d'activité d'émission lumineuse (par exemple, de rayonnement gamma) de l'objet le long de rayons R. Des mesures sont prises à des instants différents du cycle de l'objet. Pour obtenir une meilleure statistique de mesure, elles sont répétées sur plusieurs cycles et, pour chaque instant du cycle, les acquisitions réalisées aux différents cycles sont cumulées. Ainsi, on peut obtenir des premières acquisitions de l'objet aux différents états considérées, bien que la quantité restreinte d'informations recueillies à chacun de ces instants les rende imprécises. Les opérations de reconstruction de ces images premières ou primitives (tridimensionnelles) sont appelées des filtrages-rétroprojections, c'est-à-dire des inversions des projections de l'objet 1 tridimensionnel le long des rayons R sur le réseau bidimensionnel 2 de détecteurs. La restauration proposée ici des images commence ensuite.

Si on appelle $f_0, f_1, f_2, ..., f_{k-1}$ la propriété de l'objet que l'on cherche à représenter sur les images pour les k phases, $m_0, m_1, ..., m_{k-1}$ l'ensemble des mesures correspondantes prises par les détecteurs respectivement pour chacun des états de l'objet pendant ces phases, on peut écrire les équations suivantes (1) en supposant que les mesures sont acquises de la même façon pour chacune des images :

$$
\begin{aligned}
m_0 &= Rf_0 \\
&\vdots \\
m_{K-1} &= Rf_{K-1}
\end{aligned}
\qquad (1)
$$

Pour chaque état $k$, on peut ainsi disposer de L groupes de projections de M rangées et M colonnes de détecteurs, c'est-à-dire que les matrices $m_0, m_1, ..., m_{k-1}$ sont de dimension $LM^2 \times 1$. Les matrices $f_0, f_1, ..., f_{k-1}$ peuvent

être de dimension $M^3$x1 si l'objet et ses alentours sont modélisés sous forme d'un volume cubique de M points de côté. La matrice R est une matrice de projection.

L'ensemble de ces équations (1) peut s'exprimer par une seule équation (2)

$$M = \mathfrak{R}\ F \qquad\qquad (2)$$

en posant :

$$M = \begin{pmatrix} m_0 \\ \vdots \\ m_{K-1} \end{pmatrix},\ F = \begin{pmatrix} f_0 \\ \vdots \\ f_{K-1} \end{pmatrix}\ et\ \mathfrak{R} = \begin{pmatrix} R \cdots 0 \\ \vdots \ddots \vdots \\ 0 \cdots R \end{pmatrix} \qquad (3).$$

Le problème de reconstruction de premières images approximatives, sans restauration d'aucune sorte, se ramène à la résolution de l'équation (2) par une inversion de la matrice R pour chaque état. L'objet de l'invention est d'améliorer la qualité des images ainsi obtenues au moyen des procédés dont la description suit. Dans le cas où les images ne sont pas obtenues par tomographie, le problème pourra cependant être posé de façon analogue, la matrice R représentant par exemple la réponse impulsionnelle du détecteur.

La restauration de l'image peut être symbolisée en termes de probabilités composées par l'équation (4) en reprenant les termes *M* et *F* de l'équation (3) :

$$\hat{F} = arg\ \max_F \left\{ ln\ p(M\ /\ F) + ln\ p(F) \right\} \quad (4)$$

où $\hat{F}$ représente l'image restaurée, *p(F)* représente la probabilité ou la vraisemblance propre d'une image et *p(M/F)* représente la probabilité ou la vraisemblance d'une image en corrélation aux mesures *M* réellement obtenues : l'image restaurée *F* sera l'image *F* pour laquelle la somme *{ln p(M/F) + ln p(F)}* sera la plus élevée. Concrètement, *ln p(M/F)* sera élevée si *F* est une solution presque exacte de l'équation $M=\mathfrak{R}F$, à de faibles imprécisions près, et *ln p(F)* sera élevée si par exemple l'image de l'objet a une forme attendue ou si l'aspect de l'objet reste à peu près le même d'une phase à l'autre, l'image F considérée ici regroupant toutes les phases d'examen de l'objet. On voit donc apparaître trois critères pour juger de la qualité d'une image et aider à sa restauration : l'adéquation aux mesures, la cohérence spatiale et la cohérence temporelle. Ces critères sont effectivement employés dans le présent procédé et seront explicités plus loin.

On peut encore écrire, de façon équivalente à l'équation (4), l'équation (5) :

$$\hat{F} = arg\ \min_F J(F) \qquad\qquad (5)$$

où *J(F)* est une fonction formée de trois termes (6) :

$$J(F) = J_1(F) + \alpha J_2(F) + \beta J_3(F) \qquad\qquad (6)$$

et où les différents termes $J_1$, $J_2$, $J_3$ peuvent être exprimés par les équations (7) :

$$J_1(F) = \sum_{k=0}^{K-1} J_m(m_k, f_k) \qquad où : J_s(m_k, f_k) = \ln\ p(m_k\ /\ f_k)$$

$$J_2(F) = \sum_{k=0}^{K-1} J_s(f_k) \qquad où : J_s(f_k) = \ln\ p(f_k) \qquad\qquad (7),$$

$$J_3(F) = \sum_{k \neq k'} J_t(f_k, f_{k'}) \qquad où : J_t(f_k, f_{k'}) = \ln\ p(f_k\ /\ f_{k'})$$

les coefficients $\alpha$ et $\beta$ étant des constantes de pondération qui expriment l'importance donnée à chacun de ces termes.

Le terme $J_1$ correspond donc au terme $p(M/F)$ et exprime l'adéquation entre l'image estimée et les mesures, alors que les termes $J_2$ et $J_3$ appartiennent tous deux à la quantité $p(F)$ et expriment la vraisemblance spatiale et la vraisemblance temporelle de l'image estimée.

Dans la forme préférée de mise en oeuvre de l'invention, on propose de choisir le terme d'adéquation aux données $J_1(F)$ sous la forme des équations (8)

$$J_1(F) = \sum_{k=0}^{K-1} J_m\big(m_k, f_k\big)$$
$$où \qquad\qquad\qquad (8).$$
$$J_m\big(m_k, f_k\big) = \big\|m_k - Rf_k\big\|^2$$

On voit en examinant les équations (8) qu'une comparaison est faite entre les mesures effectivement obtenues, pour chacun des détecteurs 3 et chacune des phases $k$, et des mesures qui auraient été obtenues avec les détecteurs 3 placés aux même endroits en supposant que l'estimée $F$ est l'image réelle. Cela revient à comparer des projections bidimensionnelles des images restaurées aux mesures, également bidimensionnelles.

Pour le terme de régularisation spatiale, on peut choisir l'équation (9) :

$$J_2(F) = \sum_{k=0}^{K-1} J_s(f_k)$$
$$où \qquad\qquad\qquad (9),$$
$$J_s\big(f_k\big) = \big\|\Delta f_k\big\|^2$$

$\Delta f_k$ représentant le laplacien tridimensionnel de $f_k$. Il s'agit de ce qu'on appelle une contrainte de douceur qui tend à rejeter comme invraisemblables les variations trop rapides dans l'espace de la fonction $f_k$. L'emploi de ce critère permet d'obtenir des images restaurées dont la forme d'ensemble est fidèlement rendue mais dont les contours sont lissés.

En ce qui concerne enfin la régularisation temporelle, on peut estimer que l'évolution de l'activité de l'objet, ou plus généralement de la propriété mesurée, satisfait à l'équation de continuité au cours du temps :

$$\frac{\partial f}{\partial t} + \nabla.(f.v) = 0 \qquad\qquad (10)$$

où $\nabla$ représente l'opérateur de divergence et $v$ le champ de vitesse des différents points de l'objet. Si on suppose que l'objet est incompressible, l'équation de continuité s'écrit selon l'équation (11) :

$$\frac{\partial f}{\partial t} + v.\ \nabla(f) = 0 \qquad\qquad (11)$$

ce qui équivaut à dire que l'activité d'un point matériel de l'objet est constante le long de sa trajectoire. On peut alors écrire l'équation (12) :

$$f_k(i)=f_{k'}(i+d_{k,k'}(i)) \qquad (12)$$

où $d_{k,k'}(i)$ est le déplacement du point i entre les phases k et k'.

En général, le point résultant du déplacement du point i à l'instant de la phase *k* n'est pas placé sur un point de modélisation de l'objet 1 à l'instant de la phase *k'*, ce qui impose d'estimer $f_{k'}(i+d_{k,k'}(i))$ par une interpolation, par exemple au plus proche point voisin *j* de l'image discrétisée en voxels.

Le critère de régularisation temporelle finalement retenu peut être exprimé par les équations (13) et (14) :

$$J_3(F) \;=\; \sum_{k=0}^{K-1} \sum_{k' \in V_k} J_t\Big(f_k,\, f_{k'}\Big) \qquad (13)$$

où

$$J_t\Big(f_{k'},\, f_k\Big) \;=\; \sum_i w_{k,k'}(i)\Big(f_k(i) \;-\; f_{k'}\big(i + d_{k,k'}(i)\big)\Big)^2 \qquad (14).$$

$V_k$ désigne un voisinage de phases, ce qui signifie qu'on ne suit effectivement, pour chaque phase, les déplacements des points de l'image que sur une partie des autres phases, et éventuellement seulement d'une phase à l'autre pour effectuer la régularisation. Dans un mode avantageux, $V_k$ est réduit à k-1 et, par conséquent,

$$J_3(F) \;=\; \sum_{k=0}^{K-1} J_K\Big(f_k, f_{k-1}\Big)$$

et $f_{-1}=f_{k1}$. Dans un autre mode avantageux, on se limite aux phases k-1 et k+1. Les coefficients $W_{k,k'}(i)$ sont des coefficients de pondération des grandeurs pris en compte pour la régularisation, c'est-à-dire des coefficients de confiance dans les informations qu'ils peuvent apporter.

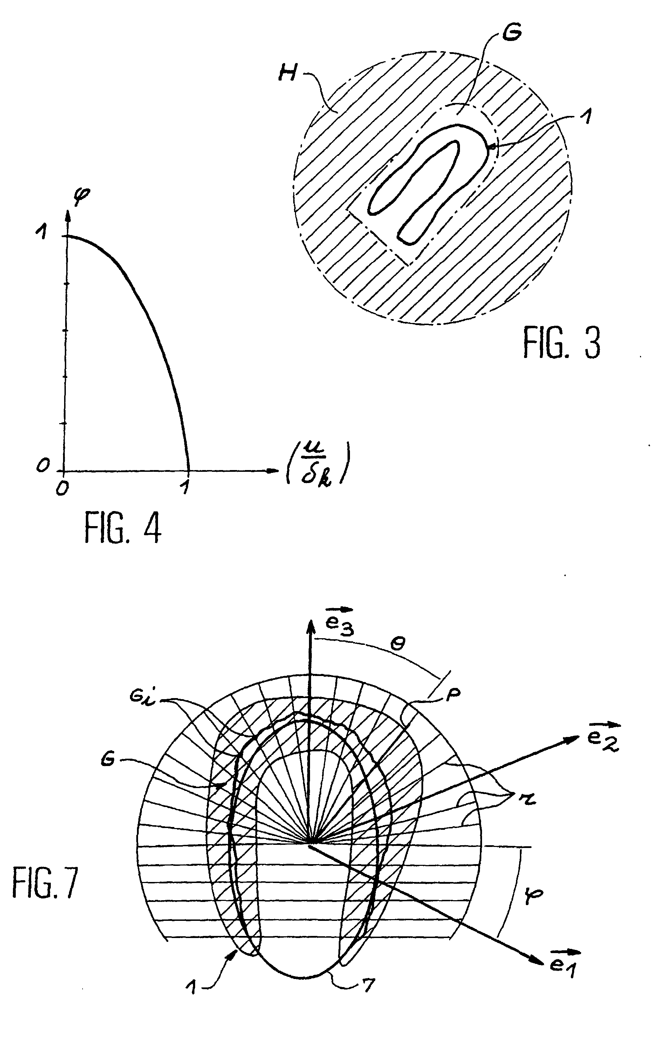

Ces coefficients $W_{k,k}(i)$ sont choisis égaux à 1 pour le fond H de l'image (cf. Figure 3), c'est-à-dire pour les points environnant l'objet à une certaine distance et qui sont supposés stationnaires. Pour les autres points de l'image, c'est-à-dire l'objet lui-même et la zone G immédiatement adjacente, les coefficients $W_{k,k}(i)$ sont donnés par l'équation (15) :

$$w_{k,k'}(i) \;=\; \varphi_{,k'k}\Big(\tilde{f}_k(i) \;-\; \tilde{f}_{k'}\big(i + d_{k,k'}(i)\big)\Big) \qquad (15)$$

où $\tilde{f}_k$ désigne l'image première ou primitive construite pour la phase *k* et $\varphi_k(u)$ est donné par l'équation (16) :

$$\varphi_{k,k'}(u) \;=\; \max\Bigg(0\,,\; 1 - \bigg(\frac{u}{\delta_{k,k'}}\bigg)^2\Bigg) \qquad (16),$$

dans laquelle $\delta_{k,k'}$ est un coefficient fixe qui exprime la distance à partir de laquelle la comparaison entre $f_k(i)$ et $f_{k'}(i+d_{k,k}(i))$ n'est plus considérée. La figure 4 représente la fonction obtenue.

Il s'agit donc d'un seuil qui permet de rejeter les points associés à des déplacements jugés faux. $\delta_{K,k'}$ peut être choisi égal à l'écart-type de la distribution de l'activité des voxels contenus dans le modèle d'enveloppe relatif à la phase *k*. Ce modèle d'enveloppe est obtenu par une homothétie de la surface $S_B$, définie plus loin, qui sert à évaluer le mouvement accompagné de déformations de l'objet 1.

L'estimée *F* est donc définie comme le minimum de la fonction $J(F)$ telle que :

$$J(F) = \sum_{k=0}^{K-1} J_{m,mk}(f_k) + \sum_{k=0}^{K-1} J_s(f_k) + \sum_{k=0}^{K-1} J_t(f_{k-1}) \qquad (17)$$

qui peut encore s'écrire par :

$$J(F) = F^t R^t R F + \alpha F^t C_s F + \beta F^t C_t F \qquad (18)$$

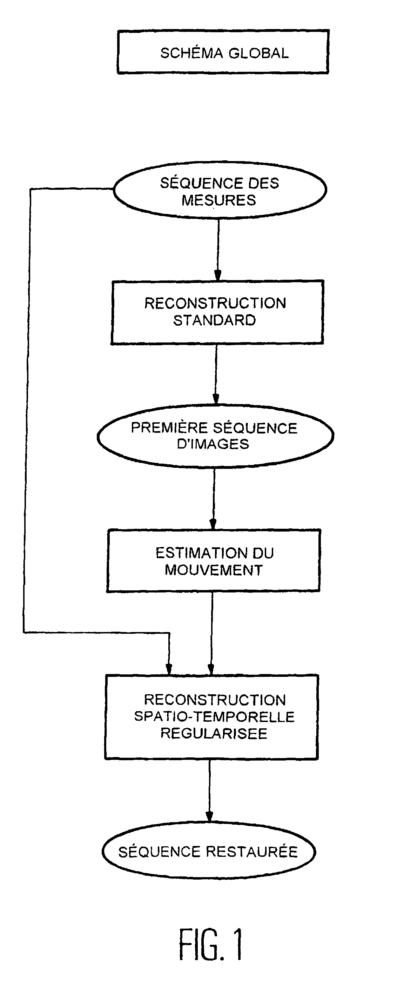

où $C_s$ et $C_t$ sont les matrices représentant les contraintes spatiale et temporelle et $\alpha$ et $\beta$ des coefficients de pondération pour ajuster l'importance des termes. La figure 1 résume l'organigramme de l'invention.

On peut théoriquement calculer $F$ par :

$$\hat{F} = (R^t R + \alpha C_s + \beta C_t)^{-1} R^t M \qquad (19),$$

mais la matrice $(R^t R + \alpha C_s + \beta C_t)$ ne peut être inversée directement à cause de ses dimensions très élevées. On choisit donc en réalité une méthode itérative pour calculer $F$.

La fonction $J(F)$ est quadratique et peut être exprimée sous la forme de l'équation (20) :

$$J(x) = \frac{1}{2} x^t A x + b^t x + c \qquad (20)$$

où $A$ est une matrice carrée symétrique définie positive, $x$ et $b$ des vecteurs et $c$ un scalaire. On pratique une méthode de descente de gradient (inspirée de l'ouvrage de Ciarlet *"Introduction à l'analyse numérique matricielle et à l'optimisation"*, Masson, 1982) en partant d'un vecteur $x_0$ arbitraire pour obtenir une suite de vecteurs $x_n$ ; cette suite converge vers la solution grâce au caractère quadratique de la fonction $J(x)$, qui n'admet qu'un minimum. Le terme $x_{n+1}$ est trouvé en résolvant l'équation (21) :

$$x_{n+1} = x_n + \alpha_n d_n \qquad (21)$$

où $d_n$ est un coefficient de direction de descente calculé à partir du gradient de $J$ en $x_n$. La méthode pratique à la convergence la plus rapide est celle du gradient conjugué, pour laquelle on choisit $d_n$ tel que $d^t_{n+1} A d_n = 0$ à chaque itération : la convergence est assurée en N itérations au plus si N est la dimension du vecteur x. Les formules suivantes (22) permettent de mettre à jour le gradient :

$$
\begin{aligned}
d_0 \quad &= r_0 \;=\; b - A x_0 \\
\alpha_{n+1} &= \frac{r_n^t r_n}{d_n^t A d_n} \\
x_{n+1} &= x_n + \alpha_n d_n \\
r_{n+1} &= r_n - \alpha_n d_n \\
\beta_{n+1} &= \frac{r_{n+1}^t r_{n+1}}{r_n^t r_n} \\
d_{n+1} &= r_{n+1} + \beta_{n+1} d_n
\end{aligned}
\qquad (22)
$$

Et dans le cas présent, on peut poser les identités (23) :

$$A = \mathfrak{R}^t\mathfrak{R}+\alpha C_s+\beta C_t$$
$$b = \mathfrak{R}^t M \qquad (23)$$
$$c = \tfrac{1}{2}\, M^t M$$

C'est donc par cet intermédiaire que l'équation (18) est résolue. En pratique, les vecteurs $x_n$, $r_n$, $d_n$ et $Ad_n$ sont calculés et mis en mémoire à chaque itération. Les opérations comprennent donc des multiplications de , $\mathfrak{R}$, $\mathfrak{R}^t$, $C_s$ et $C_t$ par $d_n$. $\mathfrak{R}$ et $\mathfrak{R}^t$ consistent en des projections et des rétroprojections de l'image de l'objet. La matrice $C_s$ est égale à $L.L$, où $L$ est la matrice d'opérateur du laplacien de chaque image de la séquence. Le laplacien d'une image tridimensionnelle est défini par l'équation (24) pour chacun des points $(l, p, q)$ de cette image :

$$\Delta f(l,p,q)=f(l+1,p,q)+f(l,p+1,q)+f(l,p,q+1)+f(l-1,p,q)+$$

$$f(l,p-1,q)+f(l,p,q-1)-6f(l,p,q) \qquad (24).$$

Enfin, la multiplication d'un vecteur $G$ représentatif d'une séquence d'images tridimensionnelles par la matrice $C_t$ revient à effectuer l'opération suivante (25) pour chaque point défini par un indice spatial $i$ et un indice temporel $k$ :

$$C_t G(i,k) = w_{k,k'}(i)g_k(i)-w_{k,k'}(i)g_{k-1}(i+d_k(i))-$$

$$(w_{k,k'}(j)g_{k+1}(i)+w_{k,k'}(j)g_{k+1}(j+d_{k+1}(j))) \qquad (25)$$

où $j$ est la position telle que $j+d_{k+1}(j)=i$.

Le processus itératif peut être initialisé par une séquence d'activité nulle de l'objet ou par une séquence reconstruite d'après les mesures, par filtrage et rétroprojection. Le processus peut être arrêté après un nombre d'itérations fixé, ou quand la séquence obtenue, visualisée, est jugée convenable par l'opérateur, ou en fonction d'un critère automatique.

A chaque itération, les coefficients de confiance doivent être recalculés selon la formule (26) tirée de la formule (19) :

$$w_{k,k'}^n(i) = \varphi_{,k'k}\left(\hat{f}_k^{n-1}(i) - \hat{f}_{k-1}^{n-1}\left(i + d_k(i)\right)\right) \qquad (26).$$

Enfin, si on admet que la minimisation de $J(F)$ est équivalente à la résolution de l'équation (27) :

$$HF = M, \qquad (27),$$

où

$$H=\mathfrak{R}^t\mathfrak{R}+\alpha C_s+\beta C_t$$

le problème est équivalent à l'équation (28) :

$$PHF = PM \qquad (28)$$

où $P$ est une matrice de préconditionnement par matrice diagonale ou par filtre, dont le but est d'accélérer le processus de convergence. Plusieurs matrices $P$ ont déjà été proposées dans l'art, de sorte que cette possibilité de préconditionnement des calculs, qui n'est d'ailleurs que facultative, n'est donnée qu'à titre de rappel.

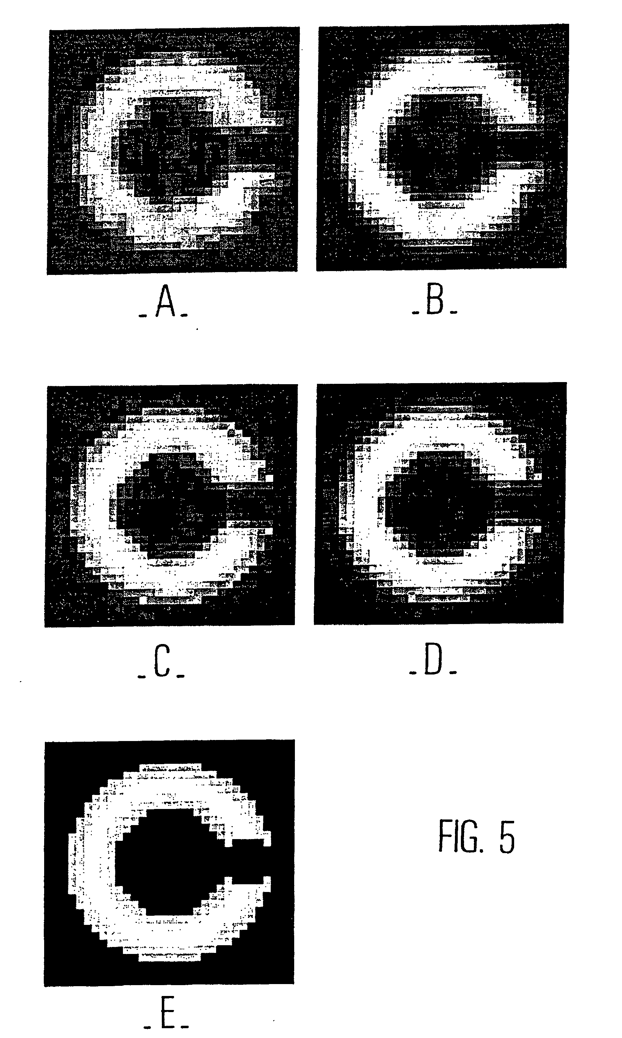

On présente encore, aux figures 5, des résultats expérimentaux dans lesquels l'objet est une sphère évidée dont l'activité d'émission croît vers une bande centrale, sauf en une zone sphérique (à droite sur les figures 5) d'activité nulle. Le mouvement de l'objet était radial avec une divergence nulle afin de respecter la contrainte d'incompressibilité. L'objet était modélisé dans un cube de 32 points de côté pour huit phases simulant un cycle cardiaque complet ; pour chaque phase, 32 projections de l'objet réparties sur 180° furent calculées numériquement et dégradées par un bruit blanc gaussien tel que $C_b = \sigma^2 I$. On donne, outre l'image réelle à la figure 5e, diverses images restaurées avec et sans l'invention pour une même phase. On présente deux images obtenues respectivement avec une régularisation spatiale seulement (coefficient $\alpha=1$, figure 5b) et une régularisation temporelle seulement (coefficient $\beta=100$, figure 5c) : comme on l'a signalé plus haut, la première donne une forme d'ensemble satisfaisante mais un contour estompé alors que la seconde donne un contour plus net et un bon rendu de la zone inactive mais des détails moins distincts car la répartition de l'activité à l'intérieur de l'objet est moins bien restituée. La régularisation spatio-temporelle conforme à l'invention (coefficient $\alpha=0,2$ et $\beta=50$, figure 5d), permet de réunir les avantages des deux régularisations précédentes. Quant à la tentative de reconstruire l'image sans régularisation ($\alpha=0$ et $\beta=0$, figure 5a), elle conduit de loin aux résultats les plus mauvais, les images étant très brouillées et le contraste avec le fond étant nettement plus faible. De plus, les images successivement estimées convergent alors mal vers une image estimée stable, ou même ne convergent pas du tout. En pratique, les images régularisées convergent relativement vite vers leur image estimée stable, et y parviennent à peu près au bout d'une dizaine d'itérations ou moins. La convergence est un peu plus rapide pour la méthode conforme à l'invention.

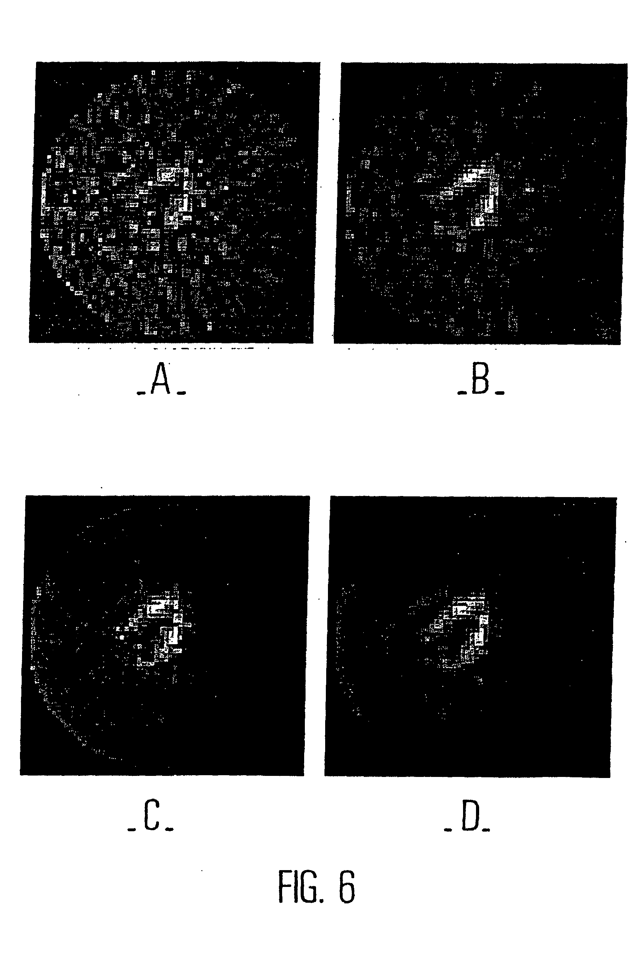

Les avantages de l'invention sont encore mieux visibles dans certains cas concrets, notamment quand l'objet a une forme irrégulière et occupe une surface plus petite sur l'image. On s'est ainsi intéressé à la restauration de la séquence d'images d'un myocarde à partir de 16 jeux de projections. Chaque jeu était constitué de 32 projections de 64x64 points d'image réparties sur 180°. Ces seize jeux de projections furent pris entre la diastole et la systole. Comme on le voit sur les figures 6, où on a représenté comme précédemment une reconstruction sans régularisation ($\alpha=0$ et $\beta=0$, figure 6a), une reconstruction avec régularisation spatiale ($\alpha=0,5$, figure 6b), une reconstruction avec régularisation temporelle ($\beta=100$, figure 6c) et enfin une reconstruction avec régularisation spatio-temporelle ($\alpha=0,4$ et $\beta=50$, figure 6d) conforme à l'invention, l'image est pratiquement inexploitable dans le premier cas, de surface très imprécise dans le deuxième à cause du manque de contraste avec le fond, et les détails de l'objet sont très mal rendus dans le troisième. Seule l'invention offre une image de bonne qualité.

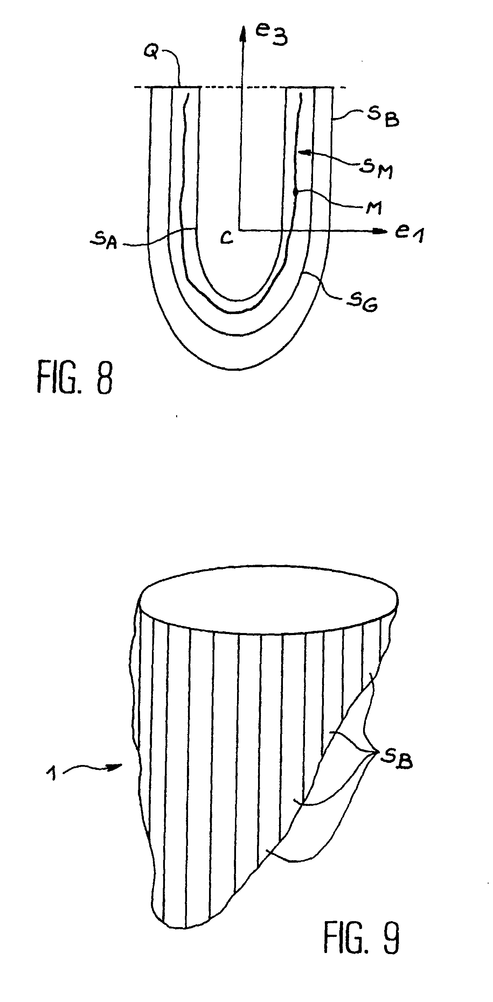

On donne maintenant en annexe un procédé pour modéliser commodément un myocarde et son mouvement, en s'appuyant sur les figures 7 à 9 ; ce procédé fait partie de la demande de brevet français 95 08001 où il est décrit dans les mêmes termes ; il n'appartient donc pas à la présente invention.

Dans le cas où on peut considérer que l'activité d'émission globale par image reste constante au cours du temps, l'équation de continuité :

$$\frac{\partial f}{\partial t} + \nabla.(f\vec{v}) = 0 \text{ , } \textit{(rappel de l'équation 10)}$$

fréquemment rencontrée en mécanique des milieux continus et mécanique des fluides, est respectée, $f(M,t)$ et $\vec{v}(M,t)$ désignant la densité d'activité d'émission et la vitesse de l'objet en un point $M$ et à un instant $t$. $\nabla$ désigne l'opérateur de divergence. On appelle $V_k$ le champ des mouvements $\vec{v}_k(M)$ des points $M$ de l'objet de l'état d'origine $(k=0)$ à l'état $k$. Il est possible de décomposer ce mouvement par l'équation :

$$\vec{v}(M) = \vec{v}(C) + \vec{\Omega} \wedge (C\vec{M}) + \vec{D}(M) \tag{29}$$

où C est le centre d'inertie de l'objet (le myocarde), $\vec{v}(C)$ et $\vec{\Omega}$ les composantes de translation et de rotation du torseur du champ de mouvement rigide de l'objet et $\vec{D}(M)$ le mouvement non rigide exprimé dans un référentiel lié à l'objet, c'est-à-dire les déformations proprement dites.

Dans le cas du myocarde, ce référentiel a pour origine et pour axes directeurs le centre C et les axes principaux d'un ellipsoïde servant à modéliser la surface barycentrique du myocarde entre ses surfaces interne et externe (endocarde et péricarde). Cette surface peut être définie en coordonnées sphérique pour la pointe du coeur (appelée apex) et cylindrique pour la base du coeur ; ce système de coordonnées est noté $(\rho, \varphi,.)$ par l'équation :

$$\rho G(\phi G,.) = \frac{\int_0^{\rho max} f(\rho, \phi G,.) \rho d\rho}{\int_0^{\rho max} f(\rho, \phi G,.) d\rho} \qquad (30)$$

où $a(\rho,\phi G,.)$ désigne l'activité d'émission au point de coordonnée $f(\rho,\phi G,.)$ et $\rho max$ désigne la distance maximale de scrutation. Pour toute coordonnée angulaire $(\phi G,.)$, le point de la surface barycentrique a donc comme coordonnée radiale $\rho G$.

Cette méthode semble plus exacte que d'autres si le coeur présente un défaut de vascularisation, et en particulier que les méthodes fondées sur la recherche des moments principaux d'inertie. En effet, les défauts d'activité qui apparaissent alors peuvent plus facilement perturber les résultats des calculs.

On a représenté sur la figure 7 un myocarde vu en coupe, l'ellipsoïde apte à modéliser la surface barycentrique et le myocarde pour les besoins d'estimation de son mouvement d'ensemble, et l'échantillonnage retenu, qui est hémisphérique du côté de la pointe du myocarde et cylindrique du côté de sa base. Pour cette partie, les rayons de détermination de la surface barycentrique $G$ sont tous parallèles. Ces rayons le long desquels les points $G_i$ sont déterminés sont tous notés par $r$.

On commence donc par calculer les points $Gi$ de coordonnées $x_i, y_i$ et $z_i$ de la surface barycentrique $G$ à l'aide de la formule donnée ci-dessus, puis on calcule les paramètres de l'ellipsoïde 7 le plus proche de cette surface en définissant la fonction d'erreur :

$$\sum_{i=1}^{N} (1 - \Gamma(x_i, y_i, z_i))^2 \qquad (31)$$

où $N$ désigne le nombre des points $G_i$ de la surface barycentrique $G$ et $\Gamma(x,y,z)$ est l'équation d'un ellipsoïde, soit

$$\Gamma(x,y,z) = a_0 x^2 + a_{1y}^{2} + a_2 z^2 + a_3 xy + a_4 xz + a_{5y} z + a_6 x + a_7 y + a_8 z = 1 \qquad (32).$$

On résout le système obtenu pour obtenir les coefficients $a_0$ à $a_8$ jusqu'à obtenir le minimum de cette fonction d'erreur ; un nouveau référentiel est associé à l'ellipsoïde obtenu, qui implique d'autres rayons de scrutation et de calcul des coordonnées des points $G_i$ ; en pratique, on recommence le procédé par itérations successives jusqu'à ce que les variations de position et d'orientation des axes du référentiel associé à l'ellipsoïde 7, et qui découlent des coefficients $a_0$ à $a_8$, deviennent insensibles compte tenu de la résolution de l'image. Pour la première itération, l'ellipsoïde 7 et le référentiel associé sont obtenus en résolvant l'équation d'erreur avec tous les points de l'image du myocarde, en l'absence de rayons permettant de calculer une surface barycentrique.

Les axes dessinés sur la figure 7 sont alors obtenus. L'axe $\vec{e}_3$ est toujours dirigé dans le grand axe de l'ellipsoïde vers la pointe du myocarde. L'origine $C$ (figure 8) est le centre de l'ellipsoïde.

Une fois que le référentiel a été calculé pour l'image k, le mouvement global de translation entre les états $0$ et $k$ est défini par le vecteur $C^0\vec{C}^k$ et la matrice de rotation est calculée par le produit des composantes des deux vecteurs

$$[\vec{e}_1^{\,k}, \vec{e}_2^{\,k}, \vec{e}_3^{\,k}]^t \cdot [\vec{e}_1^{\,o}, \vec{e}_2^{\,o}, \vec{e}_3^{\,o}].$$

Le mouvement non rigide peut être estimé à partir des contours du myocarde et de la surface barycentrique $G$. Une modélisation moins schématique du myocarde est désormais utilisée : l'endocarde et le péricarde sont modélisés par des surfaces en balle de fusil, c'est-à-dire demi-ellipsoïdales de révolution à l'extrémité et cylindriques de révolution à la base. La position de ces surfaces est effectuée en recherchant les paramètres de ces surfaces qui permettent de maximiser l'intégrale sur ces surfaces de la norme quadratique du gradient de la propriété d'émission. Cela provient de ce que, comme seul l'organe émet les photons, la variation d'émission est la plus forte en traversant ses surfaces interne et externe, et on cherche donc les surfaces de forme simple qui vérifient au mieux cette propriété. Les paramètres nécessaires à définir les deux surfaces en balle de fusil sont au nombre de cinq (la hauteur des cylindres et les mesures des ellipsoïdes aux axes principaux).

Si on appelle a la demi-mesure des ellipsoïdes selon leurs petits axes (perpendiculairement à $\vec{e}_3$), c leur demi-mesure selon leur grand axe $\vec{e}_3$, $A$ l'indice de l'endocarde, B l'indice du péricarde et h la hauteur des cylindres, les calculs sont menés en faisant varier $a_A$, $a_B$, $c_B$, et on établit par convention $c_A=1,5a_A$ car on constate que ce paramètre est difficile à calculer. De même, le paramètre $h$ ne peut pas être obtenu facilement directement. Pour cela, l'image primitive $\bar{f}^{k+1}$ est décomposée en coupes passant par l'axe $\vec{e}_3$, où $\varphi$ est constant, et on mesure pour chacune de ces coupes le gradient de l'activité le long de la surface comprise entre les courbes $S_A$ et $S_B$ modélisant l'endocarde et le péricarde. Le plan $Q$ auquel le cylindre s'arrête correspond au gradient maximal de l'activité, sommée sur toutes les coupes. Tout cela est représenté à la figure 8.

Il est alors possible de définir complètement une modélisation $S_G$ de la surface barycentrique $G$ qui est une surface en balle de fusil définie par les équations :

$$S_G \begin{cases} \Gamma(x,\ y,\ z)\ =\ a_0 x^2\ +\ a_1 y^2\ +\ a_2 z^2\ \ si\ \ z\ \geq\ 0 \\ \Gamma(x,\ y,\ z)\ =\ a_0 x^2\ +\ a_1 y^2\ \ si\ -\ h\ \leq\ z\ \leq\ 0. \end{cases} \quad (33)$$

A chaque point $M$ du myocarde, on peut faire correspondre une surface en forme de balle de fusil intermédiaire à $S_A$ et $S_B$ et définie par de nouveaux paramètres $a$ et $c$ ; $h$ restant identique. Après une déformation de dilatation ou de contraction, le point $M$ relatif à la phase k, de coordonnées $x$, $y$ et $z$, devient un point $M'$ relatif à la phase k' de coordonnées $x'$, $y'$ et $z'$ présent sur une surface de même forme et définie par les paramètres $a'$, $c'$ et $h'$ tels que :

$$x'=(a'/a)x,\ y'=(a'/a)y\ et\ z'=[(c'+h')/(c+h)]z. \tag{34}$$

En modélisant -comme illustré à la figure 9- le myocarde déformé comme une superposition de tranches en forme de balles de fusil dilatées inégalement, les déplacements de déformation du point $M$ entre les états $k$ et $k'$ suivant les trois axes peuvent être exprimés par les formules suivantes :

$$d(M)\begin{cases} d(x)\ =\ \left(\dfrac{a'}{a}\ -\ 1\right)x \\[2mm] d(y)\ =\ \left(\dfrac{b'}{b}\ -\ 1\right)y \\[2mm] d(z)\ =\ \left(\dfrac{c'+h'}{c\ +\ h}\ -\ 1\right)z \end{cases} \quad (35)$$

De façon plus précise, les coefficients $a$, $b$ et $c$ associés au point $M$ obéissent à des relations de proportionnalité avec les coefficients de même nom de la surface barycentrique d'une part, et de la surface modélisant soit l'endocarde, soit le péricarde d'autre part. Les coefficients $a'$, $b'$ et $c'$ associés au point M' obéissent aux mêmes relations avec les coefficients des mêmes surfaces de modélisation à l'état déformé.

Il faut ajouter à ces déformations les déplacements d'ensemble pour obtenir le mouvement complet en chaque point du myocarde.

Cette modélisation du myocarde ayant été explicitée, on donne ci-après quelques autres possibilités pour procéder à la régularisation spatiale et à la régularisation temporelle. Dans tous les cas, les régularisations peuvent être exprimées par des fonctions mathématiques ; les fonctions quadratiques sont préférées car elles n'admettent qu'un minimum et offrent donc une sûreté totale de convergence.

Pour la régularisation spatiale, on peut procéder par comparaison entre l'image f et un modèle $\mu$ de l'image. La fonction $J_s(f)$ peut être la norme quadratique pondérée de l'image $f$, exprimée par la formule (36) :

$$J_s(f)=(f\text{-}\mu)^t C(f\text{-}\mu) \tag{36}$$

où $C$ est une matrice symétrique définie positive. Si $C$ est choisi égal à $I$, la norme est la norme euclidienne (37) :

$$J_s(f) = (f - \mu)^t(f - \mu) = \|f - \mu\|^2 \tag{37}$$

On peut aussi recourir à la distance de Kullback-Leibler (38), dont l'intérêt est de préserver le caractère non négatif de l'activité à reconstruire :

$$J_s(f) \;=\; \sum_{i=1}^{N} p_i \ell n \, \frac{f_i}{\mu_i} \tag{38}$$

avec (39) :

$$p_i \;=\; \frac{f_i}{\displaystyle\sum_{i=1}^{N} f_i} \tag{39}.$$

En l'absence d'un modèle fiable de l'image, on peut recourir à d'autres critères tels que la douceur de l'image, dont un cas particulier a d'ailleurs été choisi et décrit plus haut comme réalisation préférée de l'invention, et qu'on peut exprimer par la formule générale (40) :

$$J_s(f) = \|\Delta^n f\|^2 \tag{40}$$

où $\Delta^n f$ est la dérivée d'ordre n de f. On peut aussi prendre $J_s(f) = \|Cf\|$ où C est un opérateur de filtrage.

L'inconvénient de ce critère est que la régularisation s'accompagne d'un effacement des contours de l'objet. On peut donc proposer un critère de formulation (41) plus compliqué :

$$J_s(f) \;=\; \sum_{i} \sum_{j \in V_i} w_{ij} \varphi \big( f_i \,-\, f_j \big)^2 \tag{41}$$

où $V_i$ est un voisinage du point $i$, $W_{ij}$ un coefficient de confiance et $\varphi$ une fonction paire continue. On peut alors choisir $\varphi$ de façon que la régularisation ne soit pas effectuée le long du contour de l'objet, entre l'objet et l'extérieur, mais seulement à l'intérieur de l'objet. Un tel critère est cependant compliqué à mettre en oeuvre et peut imposer un grand surcroît de calculs.

La régularisation temporelle a suscité beaucoup moins de travaux jusqu'à présent, et les inventeurs ne connaissent que la formule (42) suivante, extraite de l'article déjà mentionné de Lalush et Tsui :

$$J_t\big(f_k, \, f_{k'}\big) \;=\; \sum_{j \in V_{i,k}} \varphi\big(f_{i,k} \,-\, f_{j,k'}\big) \tag{42}$$

où $f$ désigne l'activité du point $i$ à la phase $k$; $V_{i,k}$ un voisinage spatio-temporel de ce point à cette phase (comprenant les six points voisins aux phases voisines $k$-1 et $k$+1) et $\varphi$ est, de nouveau, une fonction paire. Mais, comme on l'a déjà signalé, le mouvement de l'objet d'une image à l'autre n'est pas considéré dans cet article.

Dans l'invention décrite ci-dessus, le champ de déplacement $d_{k,k'}$ est calculé à partir de la séquence d'images primitives. L'intérêt de cette approche est qu'elle est autonome puisqu'elle n'exige pas d'informations supplémentaires pour déterminer ce champ. En revanche, elle est peu précise puisque l'imagerie nucléaire est d'abord une imagerie de fonctions biologiques qui ne dévoile que peu de détails. C'est pourquoi il pourrait être intéressant de calculer le champ de déplacement $d_{k,k'}$ à partir d'une séquence d'images complémentaire, après un recalage d'image selon l'article « A Survey of image registration techniques » par Lisa Gottesfeld Brown, HCM Computing Surveys, vol.24, n°4, Décembre 1992, 325-376. Cette séquence d'images supplémentaire pourrait provenir d'acquisitions réalisées soit en imagerie aux rayons X, en imagerie par résonance magnétique nucléaire, ou en imagerie ultrasonore. L'article « Computation of 3-D velocity field from 3-D cine CT Images of a human heart » par S.M. Song, R.M. Leahy, IEEE Trans. On Medical Imaging, vol.10, n°3, Septembre 1991, 296-306, décrit le calcul du champ de déplacement à partir d'une séquence d'images tomographiques du coeur par rayons X. Le champ de déplacement $d_{k,k'}$ proposé ici plus haut correspond au champ de vitesse de cet article.

## Revendications

1. Procédé de restauration d'une séquence d'images d'un corps en mouvement, comprenant les étapes suivantes :

   - obtention d'au moins une séquence d'images primitives du corps en mouvement par des mesures prises par des détecteurs ;
   - évaluation d'une loi de mouvement de l'objet au moyen de la séquence d'images primitives ;
   - modification des images primitives pour obtenir des images restaurées (F) en appliquant à la fois un critère d'adéquation (J1) des images restaurées aux mesures, un critère de régularisation spatiale (J2) des images restaurées et un critère de régularisation temporelle (J3) de la séquence des images restaurées en respectant la loi de mouvement de l'objet.

2. Procédé de restauration d'une séquence d'images selon la revendication 1, **caractérisé en ce que** les critères sont exprimés en autant de termes d'une fonction d'erreur ($J$) entre l'image restaurée et les mesures, la fonction d'erreur admettant un seul minimum correspondant à une restauration idéale.

3. Procédé de restauration d'une séquence d'images selon l'une quelconque des revendications 1 ou 2, pour lequel le mouvement est estimé à partir d'images primitives reconstruites par filtrage et rétroprojection.

4. Procédé de restauration d'une séquence d'images selon l'une quelconque des revendications 1 à 3, **caractérisé en ce que** le critère de régularisation temporelle comprend pour chaque point de chaque image restaurée une pondération ($w_{k,k'}$) en fonction de la précision de l'estimation du mouvement dudit point.

5. Procédé de restauration d'une séquence d'images selon la revendication 4, **caractérisé en ce que** la pondération est décroissante avec l'importance des mouvements pour de petits mouvements, et nulle pour de grands mouvements.

6. Procédé de restauration d'une séquence d'images selon l'une quelconque des revendications 4 ou 5, **caractérisé en ce que** le mouvement est évalué en supposant l'objet incompressible.

7. Procédé de restauration d'une séquence d'images selon l'une quelconque des revendications 1 à 6, **caractérisé en ce que** la restauration est effectuée par une méthode itérative.

8. Procédé de restauration d'une séquence d'images selon l'une quelconque des revendications 1 à 7, **caractérisé en ce que** les mesures consistent en des projections bidimensionnelles de l'objet sur un réseau bidimensionnel de détecteurs, les images sont construites à partir de rétroprojections des mesures et le critère d'adéquation comprend des comparaisons de projections des images restaurées avec les mesures.

9. Procédé de restauration d'une séquence d'images selon l'une quelconque des revendications 1 à 8, **caractérisé en ce que** le critère de régularisation spatiale comprend, pour chaque point de l'objet, un terme de variation de l'image restaurée entre ledit point et des points voisins de l'objet.

10. Procédé de restauration d'une séquence d'images selon l'une quelconque des revendications 1 à 9, **caractérisé en ce que** l'objet est un myocarde modélisé par tranches en forme de cercle dans un plan de coupe et de demi-ellipse prolongée par des parties rectilignes dans un autre plan de coupe.

**11.** Procédé de restauration d'une séquence d'images selon l'une quelconque des revendications 1 à 10, **caractérisé en ce qu'**il est appliqué à l'examen d'un coeur en tomographie d'émission monophotonique (TEMP), les mesures étant synchronisées sur le cycle cardiaque.

**12.** Procédé de restauration d'une séquence d'images selon la revendication 1, **caractérisé en ce que** la loi de mouvement se traduit par un champ de déplacement ($d_{k,k'}(i)$) de l'objet entre des phases (k,k').

**13.** Procédé de restauration d'une séquence d'images selon la revendication 1, **caractérisé en ce que** la loi de mouvement est estimée à partir d'une séquence d'images complémentaire.

**Claims**

**1.** Process for the restoration of images of a moving object, comprising the following stages:

- obtaining at least one sequence of original images of the moving body by measurements made by detectors,
- evaluating a movement law of the object by means of the sequence of original images,
- modification of the original images in order to obtain restored images (F) applying both an adequation criterion (J1) of the restored images to the measurements, a space regularization criterion (J2) of the restored images and a time regularization criterion (J3) of the sequence of restored images respecting the object movement law.

**2.** Process for restoring an image sequence according to claim 1, **characterized in that** the criteria are expressed in the same number of terms of an error function (J) between the restored image and the measurements, the error function admitting a single minimum corresponding to an ideal restoration.

**3.** Process for the restoration of an image sequence according to either of the claims 1 and 2, for which the movement is estimated from original images reconstructed by filtering and back projection.

**4.** Process for the restoration of an image sequence according to any one of the claims 1 to 3, **characterized in that** the time regularization criterion comprises for each point of each restored image a weighting ($W_{k,k'}$) as a function of the precision of the estimate of the movement of said point.

**5.** Process for the restoration of an image sequence according to claim 4, **characterized in that** the weighting is decreasing with the significance of the movements for small movements and zero for large movements.

**6.** Process for the restoration of an image sequence according to either of the claims 4 and 5, **characterized in that** the movement is evaluated assuming the object to be incompressible.

**7.** Process for the restoration of an image sequence according to any one of the claims 1 to 6, **characterized in that** restoration takes place by an iterative method.

**8.** Process for the restoration of an image sequence according to any one of the claims 1 to 7, **characterized in that** the measurements consist of bidimensional projections of the object onto a bidimensional detector network, the images being constructed from back projections of measurements and the adequation criterion comprises comparisons of projections of restored images with the measurements.

**9.** Process for the restoration of an image sequence according to any one of the claims 1 to 8, **characterized in that** the space regularization criterion comprises, for each point of the object, a restored image variation term between said point and neighbouring points of the object.

**10.** Process for the restoration of an image sequence according to any one of the claims 1 to 9, **characterized in that** the object is a myocardium modelled by circular shaped segments in a sectional and half-elliptical plane extended by rectilinear portions in another sectional plane.

**11.** Process for the restoration of an image sequence according to any one of the claims 1 to 10, **characterized in that** it applies to the examination of a heart in single-photon emission tomography, the measurements being synchronized with the cardiac cycle.

**12.** Process for the restoration of an image sequence according to claim 1, **characterized in that** the movement law is translated by a displacement field ($d_{k,k'}(i)$) of the object between phases (k,k').

**13.** Process for the restoration of an image sequence according to claim 1, **characterized in that** the movement law is estimated from a complimentary image sequence.

**Patentansprüche**

**1.** Verfahren zur Restauration einer Bildersequenz eines sich bewegenden Objekts, die folgenden Schritte umfassend:

- Herstellung wenigstens einer Sequenz ursprünglicher Bilder des sich bewegenden Objekts mit durch Detektoren ausgeführten Messungen;
- Berechung eines Bewegungsgesetzes des Objekts mit Hilfe der Sequenz ursprünglicher Bilder;
- Modifikation der ursprünglichen Bilder, um restaurierte Bilder (F) zu erhalten, indem man zugleich ein Kriterium der Anpassung (J1) der restaurierten Bilder an die Messungen, ein Kriterium der räumlichen Regularisierung (J2) der restaurierten Bilder und ein Kriterium der zeitlichen Regularisierung (J3) der Sequenz der restaurierten Bilder anwendet, wobei das Bewegungsgesetz des Objekts berücksichtigt wird.

**2.** Verfahren zur Restauration einer Bildersequenz nach Anspruch 1, **dadurch gekennzeichnet, dass** die Kriterien in ebenso vielen Termen einer Fehlerfunktion (*J*) zwischen dem restaurierten Bild und den Messungen ausgedrückt werden, wobei die Fehlerfunktion ein einziges einer idealen Restauration entsprechendes Minimum annimmt bzw. zulässt.

**3.** Verfahren zur Restauration einer Bildersequenz nach einem der Ansprüche 1 oder 2, bei dem die Bewegung aufgrund ursprünglicher, durch Filterung und Retroprojektion rekonstruierter Bilder berechnet wird.

**4.** Verfahren zur Restauration einer Bildersequenz nach einem der Ansprüche 1 bis 3, **dadurch gekennzeichnet, dass** das Kriterium der zeitlichen Regularisierung für jeden Punkt jedes restaurierten Bildes eine Gewichtung ($w_{k,k'}$) in Abhängigkeit von der Genauigkeit der Berechnung der Bewegung des genannten Punkts umfasst.

**5.** Verfahren zur Restauration einer Bildersequenz nach Anspruch 4, **dadurch gekennzeichnet, dass** die Gewichtung bei kleinen Bewegungen mit der Größe der Bewegung abnimmt und bei großen Bewegungen null ist.

**6.** Verfahren zur Restauration einer Bildersequenz nach einem der Ansprüche 4 oder 5, **dadurch gekennzeichnet, dass** die Bewegung mit der Annahme berechnet wird, dass das Objekts unkomprimierbar ist.

**7.** Verfahren zur Restauration einer Bildersequenz nach einem der Ansprüche 1 bis 6 , **dadurch gekennzeichnet, dass** die Restauration mit Hilfe einer iterativen Methode erfolgt.

**8.** Verfahren zur Restauration einer Bildersequenz nach einem der Ansprüche 1 bis 7, **dadurch gekennzeichnet, dass** die Messungen aus zweidimensionalen Projektionen des Objekts auf ein zweidimensionales Detektorengitter bestehen, wobei die Bilder aufgrund von Retroprojektionen der Messungen hergestellt werden und das Anpassungskriterium Vergleiche der Projektionen der restaurierten Bilder mit den Messungen umfasst.

**9.** Verfahren zur Restauration einer Bildersequenz nach einem der Ansprüche 1 bis 8, **dadurch gekennzeichnet, dass** das räumliche Regularisierungskriterium für jeden Punkt des Objekts einen Term zur Variation des restaurierten Bildes zwischen dem genannten Punkt und Punkten umfasst, die dem Objekt benachbart sind.

**10.** Verfahren zur Restauration einer Bildersequenz nach einem der Ansprüche 1 bis 9, **dadurch gekennzeichnet, dass** das Objekt ein Herzmuskel ist, in einer Schnittebene durch kreisförmige Scheiben modelliert und in einer anderen Schnittebene durch Scheiben mit der Form einer durch geradlinige Teile verlängerten Halb-Ellipse.

**11.** Verfahren zur Restauration einer Bildersequenz nach einem der Ansprüche 1 bis 10, **dadurch gekennzeichnet, dass** es angewandt wird, um ein Herz mittels Monophotonenemissionstomographie zu untersuchen, wobei die Messungen auf den Herzzyklus synchronisiert werden.

12. Verfahren zur Restauration einer Bildersequenz nach Anspruch 1, **dadurch gekennzeichnet, dass** das Bewegungsgesetz durch einen Verschiebebereich ($d_{k,k'}$) des Objekts zwischen Phasen (k,k') zum Ausdruck kommt.

13. Verfahren zur Restauration einer Bildersequenz nach Anspruch 1, **dadurch gekennzeichnet, dass** das Bewegungsgesetz aufgrund einer komplementären Bildersequenz berechnet wird.

SCHÉMA GLOBAL

SÉQUENCE DES MESURES

RECONSTRUCTION STANDARD

PREMIÈRE SÉQUENCE D'IMAGES

ESTIMATION DU MOUVEMENT

RECONSTRUCTION SPATIO-TEMPORELLE REGULARISEE

SÉQUENCE RESTAURÉE

FIG. 1

FIG. 2

FIG. 3

FIG. 4

FIG. 7

_A_

_B_

_C_

_D_

_E_

FIG. 5

FIG. 6

FIG. 8

FIG. 9